# EUROPEAN PATENT APPLICATION

(11) **EP 1 328 082 A2**
(43) Date of publication of application: **16.07.2003**
(21) Application number: 03000085.5
(22) Date of filing: 08.01.2003
(51) Int. Cl.: H04L 1/00

(54) **Data communication terminal device and data communication rate varying method using the same**

(30) Priority: 09.01.2002 JP 2002001872
(71) Applicant: NEC CORPORATION, Tokyo (JP)
(72) Inventor: Matsuki, Toru, Minato-ku, Tokyo (JP)
(74) Representative: VOSSIUS & PARTNER

(57) **Abstract**

A data communication terminal device does not narrow a downlink communication area upon transition from stopping state to moving state and can prevent call interruption of other terminal device. The data communication terminal device to be used in a spread spectrum mobile communication system monitors variation of moving condition of the device, and demands change of a data communication rate to a radio base station equipment depending upon a result of monitoring.

## Description

The present invention relates generally to a data communication terminal device and a data communication rate varying method using the same. More particularly, the invention relates to a data communication terminal device to be used in a spread spectrum mobile communication system.

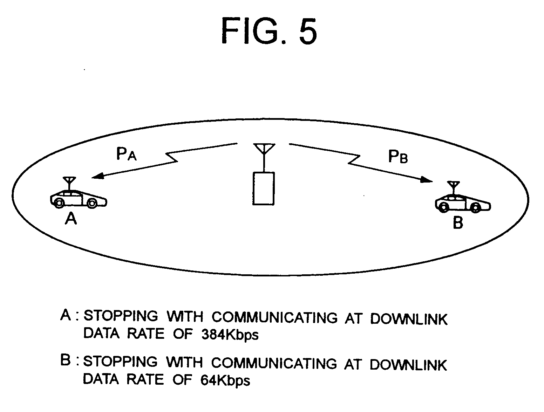

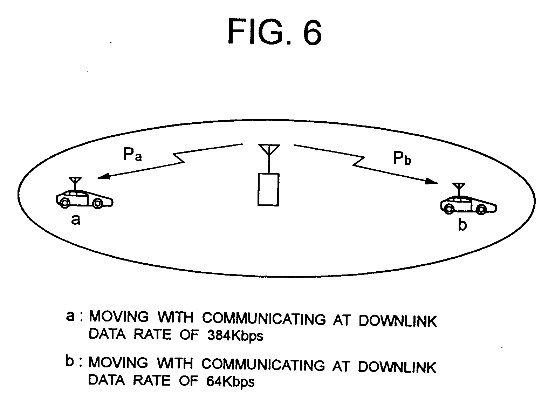

Condition of a data communication terminal device in a spread spectrum communication system is generally divided into stopping state and moving state. Furthermore, a data rate in downlink from a radio base station equipment to be received by the data communication terminal device, can be high and low. Here, discussion will be given relating to a downlink transmission power from the radio base station equipment for the cases set forth above with reference to Figs. 5 and 6.

Fig. 5 shows the case where the data communication terminal devices are stopping. In Fig. 5, "A" shows a condition communicating at high downlink data rate (384 Kbps), and "B" shows a condition communicating at low downlink data rate (64 Kbps).

Downlink transmission power of the radio base station equipment in respective of these two states "A" and "B" are assumed to be PA and PB. In this case, under the condition to obtain the same downlink communication quality between the states "A" and "B", a relationship of the downlink transmission powers PA and PB is PA > PB. Here, it is assumed that distances between the data communication terminal device and the radio base station equipment in the state "A" and the state "B" are the same. On the other hand, a difference between the downlink transmission power PA and the downlink transmission power PB is about 7 dB.

Fig. 6 shows the case where the data communication terminal devices are moving. In Fig. 6, "a" shows the condition communicating at high downlink data rate (384 Kbps) and "b" shows the condition communicating at low downlink data rate (64 Kbps).

Downlink transmission power of the radio base station equipment in respective of these two states "a" and "b" are assumed to be Pa and Pb. In this case, under the condition to obtain the same downlink communication quality between the states "a" and "b", a relationship of the downlink transmission powers Pa and Pb is Pa > Pb. Here, it is assumed that distances between the data communication terminal device and the radio base station equipment in the state "a" and the state "b" are the same. On the other hand, while the difference between the downlink transmission power Pa and the downlink transmission power Pb is variable depending upon moving condition (phasing condition), the difference is about 6.5 dB.

Consideration is given for a difference of the downlink transmission power in the case where the data communication terminal device in the conditions shown in Figs. 5 and 6. A difference between the state "A" and the state "a" is, while variable depending upon moving condition (phasing condition), about 7 dB, and Pa > PA.

In summary, assuming that the data communication terminal equipment is placed at the same position, the downlink transmission power of the radio base station equipment in the case of moving state with communication at high downlink data rate (384 Kbps) is higher than the downlink transmission power in case of stopping with communication at high downlink data rate (384 Kbps), in the extent of about 7 dB. On the other hand, the downlink transmission power in the case of moving state with communication at high downlink data rate (384 Kbps) is higher than the downlink transmission power in case of moving with communication at low downlink data rate (64 Kbps), in the extent of about 6.5 dB.

Namely, the downlink transmission power PA in the case of stopping state with communication at high downlink data rate (384 Kbps) is substantially equal to the downlink transmission power PB in the case of moving state with communication at low downlink data rate (64 Kbps) (difference is about 0.5 dB).

Here, discussion will be given for a downlink communication area of the spread spectrum mobile communication system. The spread spectrum mobile communication system is the system in which all of the data communication terminal devices in one communication area use the same frequency. A control channel used for call processing and a communication channel used for communication also use the same frequency in common. On the other hand, the downlink communication area is determined by a CIR (a ratio of desired wave and an interference wave).

Namely, in the spread spectrum mobile communication system, when number of subscribers in the communication area is increased, the downlink powers of the increased subscribers serve as interference waves for the downlink signals of other subscribers. Therefore, the spread spectrum mobile communication system has a nature to narrow the communication area according to increasing of the subscribers in the communication area.

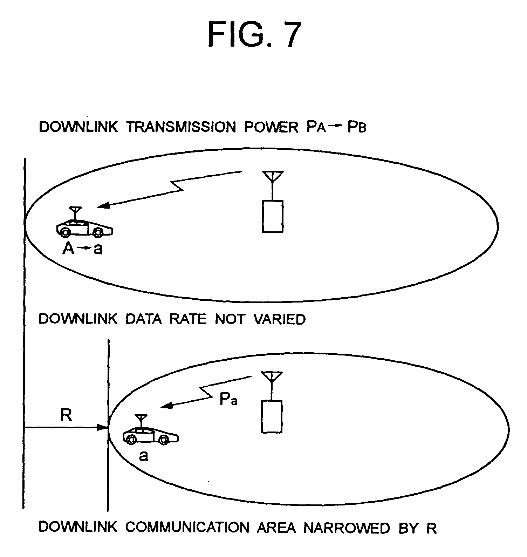

Conventionally, in the spread spectrum mobile communication system, when the terminal device in the stopping state "A" communicating at high downlink data rate (384 Kbps) transits to the moving state "a" with communication at high downlink data rate (384 Kbps), the terminal device operates to maintain downlink communication quality, as shown in Fig. 7.

In this case, the terminal device demands to the radio base station equipment to switch the downlink transmission power from PA to Pa. Here, since Pa is higher than PA in the extent of about 6.5 dB, the downlink communication area is narrowed in the extent of "R".

In the conventional spread spectrum mobile communication system set forth above, when the terminal device in the stopping state communicating at high downlink data rate transits to the moving state with communication at high downlink data rate, switching of the downlink transmission power is demanded. However, since the downlink communication area is narrowed by the extent of R, call interruption can be caused in other terminal communicating at the position where becomes out of the communication area resulting in narrowing of the communication area.

The present invention has been worked out for solving the problem in a spread spectrum mobile communication system. Therefore, it is an object of the present invention to provide a data communication terminal device and a data communication rate varying method using the same which does not narrow a downlink communication area upon transition from stopping state to moving state and can prevent call interruption of other terminal device.

According to the first aspect of the present invention, a data communication terminal device to be used in a spread spectrum mobile communication system comprises:
means for monitoring variation of moving condition of the device; and
means for demanding change of a data communication rate to a radio base station equipment depending upon a result of monitoring.

According to the second aspect of the present invention, a method of varying data communication rate of a data communication terminal device to be used in a spread spectrum mobile communication system comprises the steps of:
monitoring variation of moving condition of the device; and
demanding change of a data communication rate to a radio base station equipment depending upon a result of monitoring.

Namely, the data communication terminal device of the present invention is characterized by capability of demanding variation of the data communication rate depending upon variation of the moving condition in the device used in the spread spectrum mobile communication system.

The data communication terminal device of the present invention has a function of constantly monitoring the moving condition of the device by a searcher function of a receiving portion provided internally. Particularly, the moving condition can be detected by integrating varying condition of the phasing vector obtained by despreading of the pilot signal. When the data communication terminal device is stopping, variation of phasing vector is small and when the data communication is moving, variation of phasing vector becomes large.

As set forth above, by providing a function of discriminating the stopping state and the moving state using variation of the phasing vector in the data communication terminal device, the data communication terminal device which is in a mode for receiving data at high downlink data rate while stopping, becomes a mode for receiving data at low downlink data rate upon starting moving. Thus, upon starting movement of the data communication terminal device, abrupt increase of the downlink transmission power to the data communication terminal device can be presented to avoid narrowing of the downlink communication area.

By this, it becomes possible to prevent call interruption of other data communication terminal device. On the other hand, the data communication terminal device which is in the mode receiving data at low downlink data rate during moving, may receive service of high data rate upon stopping.

The present invention will be understood more fully from the detailed description given hereinafter and from the accompanying drawings of the preferred embodiment of the present invention, which, however, should not be taken to be limitative to the invention, but are for explanation and understanding only.

In the drawings:
Fig. 1 is a block diagram showing a construction of one embodiment of a data communication terminal device according to the present invention;
Fig. 2 is an illustration showing a phasing vector information as an output from a despreading portion of Fig. 1;
Fig. 3 is a flowchart showing operation of a data generating portion of Fig. 1;
Fig. 4 is an illustration for explaining operation of one embodiment of the data communication terminal device according to the present invention;
Fig. 5 is an illustration showing a communicating condition in the case where the conventional data communication terminal device is stopping;
Fig. 6 is an illustration showing a communicating condition in the case where the conventional data communication terminal device is moving; and
Fig. 7 is an illustration for explaining operation of the conventional data communication terminal device.

The present invention will be discussed hereinafter in detail in terms of the preferred embodiment of a data communication terminal device and a data communication rate varying method using the same in accordance with the present invention with reference to the accompanying drawings. In the following description, numerous specific details are set forth in order to provide a thorough understanding of the present invention. It will be obvious, however, to those skilled in the art that the present invention may be practiced without these specific details.

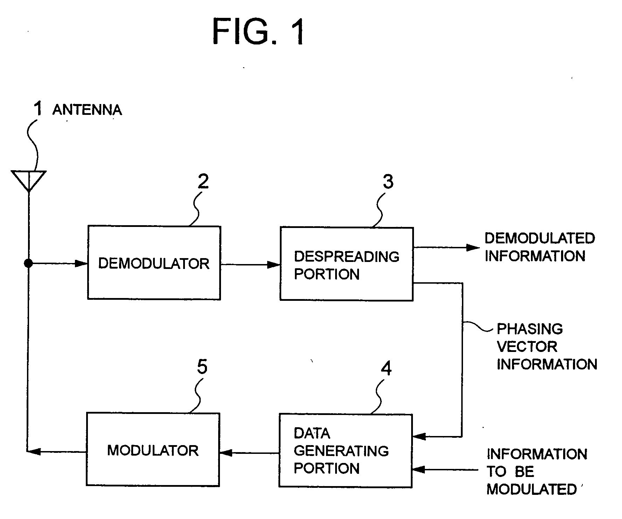

Fig. 1 is a block diagram showing a construction of the preferred embodiment of a data communication terminal device according to the present invention. In Fig. 1, the data communication terminal device according to the present invention is constructed with an antenna 1, a demodulator 2 receiving a downlink signal from a radio base station equipment (not shown), a despreading portion 3 despreading a downlink CDMA (Code Division Multiple Access) signal and outputting a demodulation information together with a phasing vector information, a data generating portion 4 receiving a information to be modulated and a phasing vector information and outputting an uplink data, and a modulator 5 receiving the uplink data from the data generating portion 4 and transmitting an uplink signal to the radio base station equipment.

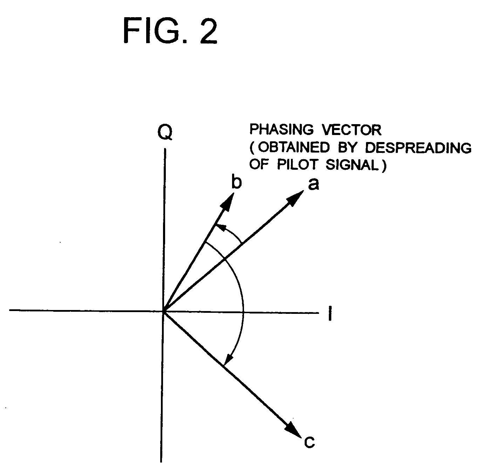

Fig. 2 is an illustration showing the phasing vector information as the output from the despreading portion 3 shown in Fig. 1. In Fig. 2, the phasing vector information output from the despreading portion 3 is an information which can be shown on an I/Q plane and whose vector value is variable depending upon a speed and direction of motion of an own device. Namely, variation of the phasing vector is little while the data communication terminal device is stopping, and variation of the phasing vector is significant while the device is moving (for example, a→b→c).

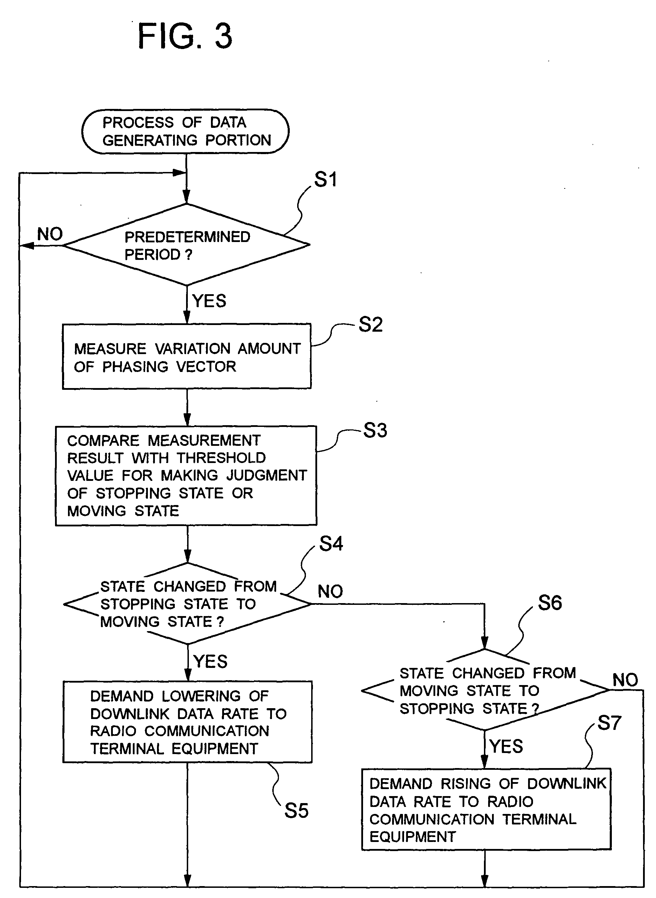

Fig. 3 is a flowchart showing operation of the data generating portion of Fig. 1. Referring to Figs. 1 and 3, discussion will be given for operation of the data generating portion 4.

The data generating portion 4 measures variation amount of the phasing vector from the despreading portion 3 (steps S1 and S2 of Fig. 3) and compares the result of monitoring with a threshold value for making judgment whether the own device (the data communication terminal device) is stopping or moving per a preliminarily set given period (step S3 of Fig. 3).

In the step S3, for example, the data generating portion 4 integrates variation of the phasing vector obtained by despreading a polot signal and compares a result of the integrating value with the threshold value.

When state of the own device is transited from stopping state to moving state (step S4 of Fig. 3), the data generating portion 4 demands lowering of data rate of the downlink signal to the radio base station equipment (step S5 of Fig. 3). On the other hand, when state of the own device is transited from moving state to stopping state (step S6 of Fig. 3), the data generating portion 4 demands rising of data rate of the downlink signal to the radio base station equipment (step S7 of Fig. 3).

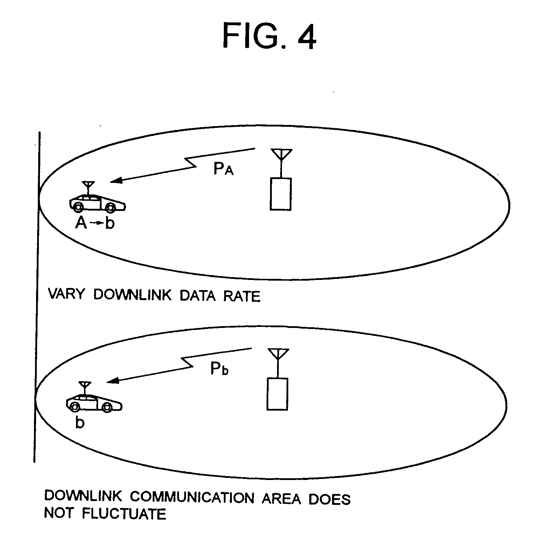

Fig. 4 is an illustration for explaining operation of the preferred embodiment of the data communication terminal device according to the present invention. With reference to Figs. 1 and 4, operation of the preferred embodiment of the data communication terminal device of the present invention will be discussed.

As shown in Fig. 4, when the data communication terminal device starts moving from the state "A", in which the data communication terminal device is stopping and communicating at high downlink data rate (384 Kbps), it becomes necessary to increase downlink transmission power of the radio base station equipment in order to maintaining the downlink data rate high.

Increasing of the downlink transmission power serves as increasing of interference level for other terminal devices in communication in the same area resulting in narrowing of the downlink communication area. Therefore, a function for making judgment of starting of movement is provided for the data communication terminal device per se so that the data communication terminal device per se may demand to the radio base station equipment for changing state into the state "b" for communication at low downlink data rate (64 Kbps). Thus, increasing of the downlink transmission power can be minimized to prevent fluctuation of the downlink communication area.

On the other hand, when the state the data communication terminal device is transited from the state "b" in which the data communication terminal device is moving and communicating at low downlink data rate (64 Kbps) to the stopping state, the data communication terminal device per se may demand to the radio base station equipment for providing service to the user of the data communication terminal device at high downlink data rate.

As set forth above, in the shown embodiment, when the data communication terminal device stopping with communicating at high downlink data rate transits to moving state, the data communication terminal device per se may demand to the radio base station equipment for changing for lowering the downlink data rate to prevent increasing of the transmission power of the radio base station equipment. Thus, call interruption of other terminal device in communication can be prevented.

On the other hand, in the shown embodiment, when the data communication terminal device in moving with communicating at low data rate transits to stopping state, the data communication terminal device per se may demand to the radio base station equipment for changing for increasing the downlink data rate to provide service to the user at high downlink data rate.

As set forth above, in the data communication terminal device to be used in the spread spectrum mobile communication system, variation of moving condition of the data communication terminal device is measured and change of the data communication rate is demanded to the radio base station equipment depending upon the result of measuring to successfully prevent narrowing the downlink communication area and whereby to prevent call interruption caused on other terminal device.

Although the present invention has been illustrated and described with respect to exemplary embodiment thereof, it should be understood by those skilled in the art that the foregoing and various other changes, omission and additions may be made therein and thereto, without departing from the spirit and scope of the present invention. Therefore, the present invention should not be understood as limited to the specific embodiment set out above but to include all possible embodiments which can be embodied within a scope encompassed and equivalent thereof with respect to the feature set out in the appended claims.

## Claims

1. A data communication terminal device to be used in a spread spectrum mobile communication system comprising:
means for monitoring variation of moving condition of the device; and
means for demanding change of a data communication rate to a radio base station equipment depending upon a result of monitoring.

2. A data communication terminal device as set forth in claim 1, wherein said means for monitoring variation of the moving state measures said moving state by integrating variation of a phasing vector obtained by despreading a pilot signal.

3. A device as set forth in claim 1 or 2, wherein said means for monitoring variation of said moving state measures variation amount of said phasing vector and comparing the result of monitoring with a threshold value for making judgment whether the device is moving or stopping.

4. A device as set forth in claim 1, 2 or 3, wherein said means for demanding variation of data communication rate demands lowering of data rate of a downlink signal when state of the device transits from stopping state to moving state and demands rising of data rate of the downlink signal when state of the device transits from moving state to stopping state.

5. A method of varying data communication rate of a data communication terminal device to be used in a spread spectrum mobile communication system comprising the steps of:
monitoring variation of moving condition of the device; and
demanding change of a data communication rate to a radio base station equipment depending upon a result of monitoring.

6. A method of varying data communication rate as set forth in claim 5, wherein said step of monitoring variation of the moving state measures said moving state by integrating variation of a phasing vector obtained by despreading a pilot signal.

7. A method of varying data communication rate as set forth in claim 5 or 6, wherein said step of monitoring variation of said moving state measures variation amount of said phasing vector and comparing the result of monitoring with a threshold value for making judgment whether the device is moving or stopping.

8. A method of varying data communication rate as set forth in claim 5, 6 or 7, wherein said step of demanding variation of data communication rate demands lowering of data rate of a downlink signal when state of the device transits from stopping state to moving state and demands rising of data rate of the downlink signal when state of the device transits from moving state to stopping state.
